Europäisches Patentamt

European Patent Office

Office européen des brevets

(19)

(11) Veröffentlichungsnummer : **0 177 700**
**B1**

(12) # EUROPÄISCHE PATENTSCHRIFT

(45) Veröffentlichungstag der Patentschrift :
19.07.89

(21) Anmeldenummer : 85109737.8

(22) Anmeldetag : 02.08.85

(51) Int. Cl.⁴ : **B 23 C   5/20**

(54) **Fräser mit auswechselbaren Schneidlingen.**

(30) Priorität : 13.09.84 DE 8427007 U

(43) Veröffentlichungstag der Anmeldung :
16.04.86 Patentblatt 86/16

(45) Bekanntmachung des Hinweises auf die Patenterteilung : 19.07.89 Patentblatt 89/29

(84) Benannte Vertragsstaaten :
CH FR GB IT LI

(56) Entgegenhaltungen :
EP--A-- 0 049 796
DE--A-- 3 319 642
DE--B-- 1 143 082
GB--A-- 1 241 950

(73) Patentinhaber : **Ledermann GmbH & Co.**
**Stadionstrasse 2-2a**
**D-7240 Horb am Neckar (DE)**

(72) Erfinder : **Mellert, Erwin**
**Stadionstrasse 54**
**D-7240 Horb a.N. (DE)**

(74) Vertreter : **Ott, Elmar, Dipl.-Ing.**
**Kappelstrasse 8**
**D-7240 Horb 1 (DE)**

EP 0 177 700 B1

## Beschreibung

Die Erfindung betrifft einen Fräser mit auswechselbaren Schneidlingen, die mittels Klemmelementen in Nuten im Fräserkörper befestigt sind und auf zwei Stützlagern radial und auf einem Stützlager axial abgestützt sind, wobei die Schneidlinge an der ihrer Schneide gegenüberliegenden unteren Seite als Stützlager ausgebildete Lagerelemente haben.

Bei bekannten Fräsern sind die Schneidlinge mittels einer 3-Punkt-Auflage gegenüber dem Fräserkörper abgestützt. Die Auflage für die Schneidlinge muß sehr genau sein, damit an dem zu bearbeitenden Werkstück maßgenaue und glatte Oberflächen erzielt werden können. Bei Profilfräsern, an deren Fräserkörper am Umfang mehrere Schneidlinge angeordnet sind, muß natürlich die axiale und radiale Ausrichtung sämtlicher Schneidlinge sehr genau übereinstimmen.

Aus der DE-PS 1 427 077 ist ein Fräser mit im Fräserköper auswechselbar angeordneten Schneidlingen bekannt, bei dem die zur Befestigung der Schneidlinge vorgesehenen Klemmelemente Lagernocken aufweisen, die für die Schneidlinge jeweils eine 3-Punkt-Auflage bilden. Die Klemmelemente mit den Lagernocken sind in Aussparungen am Fräserkörper eingesetzt und werden mittels weiterer Klemmkeile in der Aussparung verklemmt. Für die Befestigung eines Schneidlinges sind bei diesem bekannten Fräser insgesamt vier Klemmelemente erforderlich, von denen zwei Lagernocken aufweisen. Die Toleranz der Auflagepunkte an den Lagernocken wird durch die Fertigungstoleranzen der Aussparungen am Fräserkörper und durch die Fertigungstoleranzen der die Lagernocken aufweisenden Klemmelemente nachteilig beeinflußt. Weiterhin wird die Lage der jeweils wirksamen Schneide des Schneidlinges auch durch die Maßgenauigkeit des jeweiligen Schneidlings beeinflußt. Bei diesem bekannten Fräser ist es somit sehr schwierig, eine genaue und für sämtliche Schneidlinge übereinstimmende Justierung zu erhalten.

Aus GB-A-1 241 950 ist ein Fräser mit auswechselbaren Schneidlingen bekannt, bei dem eine Zunge verwendet wird, die zwei gegenüberliegende axial wirkende Lagerflächen besitzt. Diese beiden Lagerflächen wirken dort mit den seitlichen Begrenzungen einer Nut zusammen. Die Zunge und die Nut müssen daher für eine exakte radiale Positionierung mit entsprechend kleinen Toleranzen gefertigt werden, wobei sich jedoch stets die Toleranzen der gegenüberliegenden axialen Lagerflächen addieren. Auch muß bei den Schneidlingen gemäß dieser Erfindung eine äußerst exakte Nachbehandlung im Bereich der breiten Lagerflächen vorgenommen werden, um eine ausreichend genaue Positionierung zu ermöglichen.

Der Erfindung liegt die Aufgabe zugrunde, einen Fräser mit auswechselbaren Schneidlingen zu schaffen, bei dem die die axiale und radiale Lage der Schneidlinge bestimmenden Lager auf einfache Weise mit hoher Genauigkeit herstellbar sind.

Die Lösung dieser Aufgabe wird bei einem Fräser der eingangs genannten Gattung durch die im Hauptanspruch angegebenen Merkmale erhalten. Die glatten Auflageflächen in den Nuten können so verhältnismäßig einfach mit hoher Genauigkeit hergestellt werden. Die Schneidlinge werden auf diesen Auflageflächen mit an ihrer Unterseite vorgesehenen Lagerelementen, die vorzugsweise als Lagernocken ausgebildet sind, aufgesetzt. Die Genauigkeit der radialen Ausrichtung der Schneidlinge wird somit durch die Genauigkeit der Auflagefläche in der zugehörigen Nut und durch die Maßgenauigkeit der am Schneidling angeformten Lagerelemente bzw. Lagernocken bestimmt. Als axial wirkende Anschlagelemente ist vorzugsweise in jeder Nut ein senkrecht an der Auflagefläche nach außen abstehender Stift vorgesehen, an dem das axial ausgerichtete Lagerelement des eingesetzten Schneidlings anliegt. Am Fräserkörper sind also als Auflage für die Schneidlinge lediglich jeweils eine glatte Auflagefläche und ein axial wirkendes Anschlagelement erforderlich, an denen die Schneidlinge ohne Zwischenstücke direkt anliegen. Dabei ist noch von besonderer Bedeutung, daß die an den Schneidlingen vorgesehenen Lagerelemente für mehrere Schneidlinge belspielsweise in einem gemeinsamen Fräsvorgang ausgebildet werden können, so daß für sämtliche Schneidlinge die Lage der Lagerelemente sehr genau übereinstimmt.

Da beim Anmeldungsgegenstand nur eine einzige axial wirkende Lagerfläche vorgesehen ist, ist ebenfalls eine entsprechend exaktere Positionierung möglich.

Beim Erfindungsgegenstand besitzen die Schneidlinge eine 3-Punkt-Lagerung durch zwei radiale und ein axiales Lager gebildet wird. Dadurch wird der ganz wesentliche Vorteil erzielt, daß die vorzugsweise aus gesintertem Hartmetall bestehenden Schneidlinge im Bereich der Lagerung keinerlei Nachbearbeitung erfordern. Die Lagerung mit den speziell ausgebildeten Lagerelementen weist eine derart hohe Genauigkeit auf, daß ein Nachschleifen oder eine sonstige Nachbehandlung unterbleiben kann.

Außerdem wird durch die spezielle Ausbildung der Schneidlinge mit nur einer axial ausgerichteten Anlagefläche beim Erfindungsgegenstand erreicht, daß der Schneidling nicht seitenverkehrt in die Nut des Fräsers einsetzbar ist. Ein derartiges falsches Einsetzen des Schneidlings wird dadurch ausgeschlossen.

Die Ausbildung sämtlicher Lagerelemente als an den Schneidlingen angeformte Lagernocken bringen in Verbindung mit der durchgehenden, glatten Auflagefläche in den Nuten eine hohe Genauigkeit für die Positionierung der Schneidlinge und damit für die zu profilierenden Teile.

Eine Weiterbildung der Erfindung sieht vor, daß das axiale Lagerelement eine seitliche Begrenzung einer an der unteren Seite des Schneidlings vorgesehenen Aussparung bildet. Zur axialen Ausrichtung der Schneidlinge besitzen diese an ihrer Uhterseite eine Aussparung, in die das jeweils zugehöriges Anschlagelement des Fräserkörpers von unten eingreift. Vor dem Einsetzen der Schneidlinge in die entsprechenden Nuten können die Schneidlinge mit einer Stützplatte und einem Klemmkeil zu einer Kassette zusammengesetzt werden, die seitlich in die Nut so weit eingeschoben wird, bis der Schneidling mit der einen Seite der Aussparung am Anschlagelement anliegt.

Eine besonders vorteilhafte Weiterbildung erhält man dadurch, daß die dem axialen Lagerelement gegenüberliegende seitliche Begrenzung der Aussparung geneigt oder gewölbt ist. Auf diese Weise kann sichergestellt werden, daß der Schneidling nicht seitenverkehrt eingesetzt wird, da die geneigte oder gewölbte Seite der Aussparung keinen Anschlag bilden kann. Ein seitenverkehrt eingesetzter Schneidling würde daher beim seitlichen Einschieben über das am Fräserkörper abstehende Anschlagelement hinwegrutschen. Zu diesem Zweck kann die geneigte oder gewölbte Begrenzung der Aussparung einen stumpfen Winkel mit der unteren Seite des Schneidlings bilden.

Ein falsches Einsetzen der Schneidlinge kann auch dadurch vermieden werden, daß das axiale Lagerelement im Abstand von der Mitte der unteren Seite angeordnet ist. Diese asymmetrische Anordnung der Aussparung und die einseitig geneigte oder gewölbte Begrenzung der Aussparung stellen in hohem Maße sicher, daß die Schneidlinge nicht seitenverkehrt am Fräserkörper montiert werden.

Vorteilhafte Weiterbildungen sind in den Unteransprüchen gekennzeichnet.

Die Erfindung wird anhand der Zeichnung, die Ausführungsbeispiele darstellt, näher erläutert.

Es zeigen :

Fig. 1 die Stirnseite eines Fräsers mit auswechselbaren Schneidlingen,

Fig. 2 eine Seitenansicht des Fräsers von Fig. 1 im Schnitt,

Fig. 3 und Fig. 4 Schneidlinge mit unterschiedlichen Ausführungen von Lagerelementen und Aussparungen.

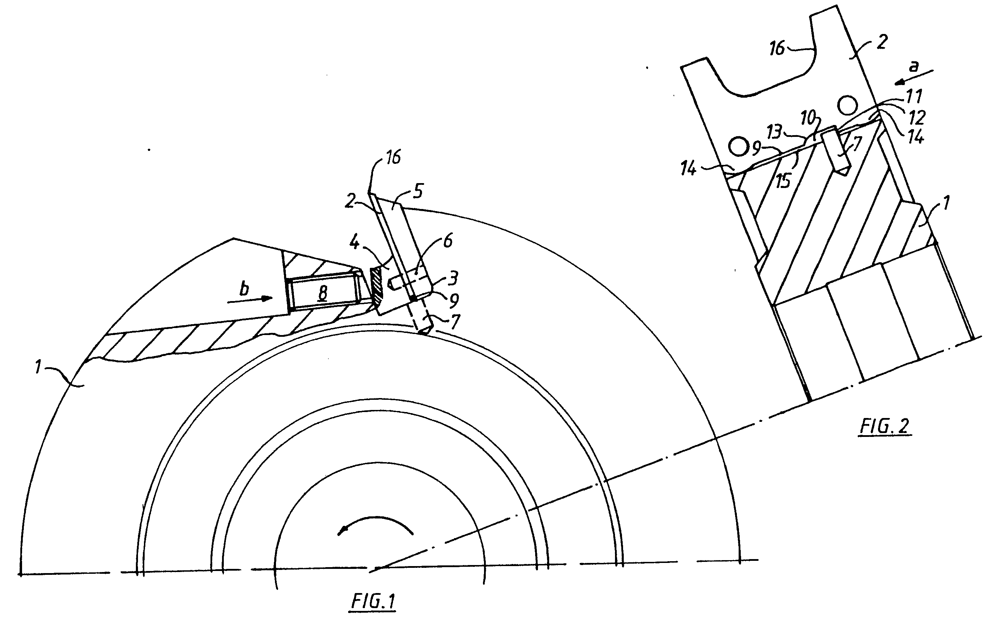

Der in Fig. 1 teilweise dargestellte Fräser besteht im wesentlichen aus einem Fräserkörper 1 und Schneidlingen 2, die in entsprechende am Fräserkörper 1 ausgebildete Nuten 3 eingesetzt sind. Es kann sich dabei beispielsweise um drei am Umfang des Fräserkörper 1 verteilt angeordnete Nuten mit zugehörigen Schneidlingen handeln. Der Einfachheit halber ist in der Zeichnung jedoch nur eine Nut 3 mit zugehörigem Schneidling 2 dargestellt.

Der Schneidling 2 befindet sich zwischen zwei Klemmelementen, nämlich einem Klemmkeil 4 und einer Stützplatte 5, die zusammen mit dem Schneidling 2 eine Kassette bilden. Damit die Einzelteile der Kassette nicht gegenseitig verrutschen, sind Zentrierstifte 6 vorgesehen.

Die Schneidlinge 2 werden in der Weise am Fräserkörper 1 befestigt, daß die vormontierte Kassette von oben in die Nut 3 eingeschoben und entsprechend der Pfeilrichtung a (Fig. 2) gegen das Anschlagelement 7 angedrückt wird. In dieser Stellung wird die Kassette mittels einer Spannschraube 8 in der Nut 3 verspannt. Die Spannschraube 8 wird zu diesem Zweck in Pfeilrichtung b in den Fräserkörper 1 eingedreht, so daß sie sich mit dem Klemmkeil 4 verspannt. Der Schneidling 2 besitzt an seiner unteren Seite 9 eine Aussparung 10, deren eine seitliche Begrenzung 11 ein axial wirkendes Lagerelement 12 bildet. Die dem Lagerelement 12 gegenüberliegende seitliche Begrenzung 13 der Aussparung 10 verläuft bogenförmig und bildet einen stumpfen Winkel mit der unteren Seite 9. Würde man den Schneidling 2 seitenverkehrt zwischen den Klemmkeil 4 und die Stützplatte 5 einsetzen, so hätte dies zur Folge, daß der Schneidling 2 mit der gewölbten seitlichen Begrenzung 13 gegen das Anschlagelement 7 eingeschoben würde. Die gewölbte oder gebogene Begrenzung 13 kann aber nicht als Anschlag oder Lager dienen, weshalb die Kassette mit dem Schneidling 2 über das Anschlagelement 7 hinweggeschoben würde. Eine seitenverkehrte Montage des Schneidlinges 2 wird auf diese Weise ausgeschlossen.

Als radial wirkende Lagerelemente besitzt der Schneidling 2 außen an der unteren Seite 9 zwei angeformte Lagernocken 14, die auf einer ebenen Auflagefläche 15 aufliegen. Die Auflagefläche 15 bildet den Nutengrund der Nut 3.

Der in den Fig. 1 und 2 dargestellte Schneidling 2 besitzt eine U-förmige Schneide 16, die beispielsweise zum Fräsen von Profilleisten aus Holz dient. Die radial wirkenden Lagernocken 14 sind kreisbogenförmig ausgebildet, so daß eine linienförmige Auflage erhalten wird. Durch Wölbung der Auflagefläche 15 oder durch die Verwendung von sphärischen Lagernocken 14 kann auch eine punktförmige Auflage erhalten werden. Insbesondere bei schmalen Schneidlingen kann die Auflagefläche 15 plan geschliffen sein und die Lagernocken 14 können zylindrisch ausgebildet sein.

In Fig. 2 ist das axiale Lagerelement 12 als gerader Anschlag dargestellt, jedoch wird auch dieses Lagerelement 12 vorzugsweise als Lagernocken ausgebildet.

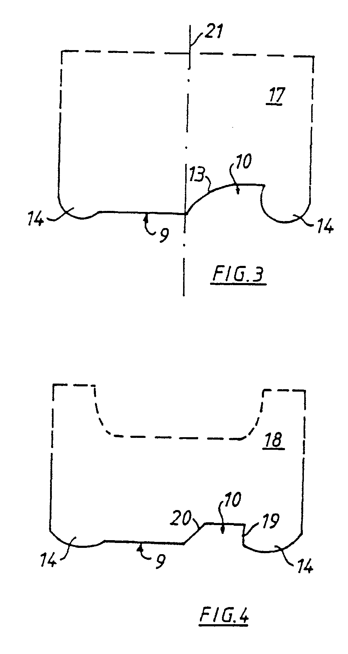

Bei dem in Fig. 3 dargestellten Schneidling 17 ist der rechte Lagernocken 14 als radial wirkendes Lagerelement und als axiales Lagerelement ausgebildet. Bei dem in Fig. 4 dargestellten Schneidling 18 ist ein axial wirkender Lagernocken 19 vorgesehen, der einen anderen Radius hat als die radial wirkenden Lagernocken 14. Die dem axial wirkenden Lagernocken 19 gegenüberliegende Seite der Aussparung 10 ist in diesem Ausführungsbeispiel als Schräge 20 ausgebildet. Die in den Fig. 2 und 3 dargestellten gewölbten Begrenzungen 13 und die Schräge 20 von Fig. 4 bilden jeweils mit der unteren Seite 9 einen stumpfen Winkel, der so groß ist, daß diese seitlichen Begrenzungen der Aussparungen 10 nicht als Anschlag für das Anschlagelement 7 wirken können.

Bei den dargestellten Ausführungsbeispielen sind die axial wirkenden Lagerelemente 12, 19 im Abstand von der Mitte 21 der Schneidlinge 2, 17, 19 angeordnet, wodurch ebenfalls ein seitenverkehrtes Einsetzen der Schneidlinge vermieden werden kann.

Es wird auch noch darauf aufmerksam gemacht, daß bei geneigt angeordneten Schneidlingen, bei denen die untere Seite 9 ebenso wie die Auflagefläche 15 nicht parallel zur Rotationsachse verläuft, die in die Aussparungen 10 eingreifenden Anschlagelemente 7 ein seitliches Auswandern der Schneidlinge verhindern. Die Anordnung des beispielsweise als Zylinderstift ausgebildeten Anschlagelementes 7 ermöglicht in Verbindung mit den seitlichen Begrenzungen der jeweils zugehörigen Aussparung 10 eine problemlose und genaue Montage sowie eine sichere Befestigung der Schneidlinge.

Es wird noch angemerkt, daß die vorzugsweise als Lagernocken ausgebildeten Lagerelemente auch in beliebiger anderer Form ausgebildet sein können.

### Patentansprüche

1. Fräser mit auswechselbaren Schneidlingen (2, 17, 18), die mittels Klemmelementen (4) in Nuten (3) im Fräserkörper (1) befestigt sind und auf zwei Stützlagern radial und auf einem Stützlager axial abgestützt sind, wobei die Schneidlinge (2, 17, 18) an der ihrer Schneide (16) gegenüberliegenden unteren Seite (9) als Stützlager ausgebildete Lagerelemente haben, dadurch gekennzeichnet, daß an den Schneidlingen (2, 17, 18) jeweils ein einziges axial ausgerichtetes Lagerelement (12, 19) ausgebildet ist, welches einseitig an einem am Nutengrund radial abstehenden Anschlagelement (7) anliegt, und daß die radial wirksamen Lagerelemente (14) an der unteren Seite (9) abstehen.

2. Fräser nach Anspruch 1, dadurch gekennzeichnet, daß das axiale Lagerelement (12, 19) eine seitliche Begrenzung einer an der unteren Seite (9) des Schneidlings (2, 17, 18) vorgesehenen Aussparung (10) bildet.

3. Fräser nach Anspruch 2, dadurch gekennzeichnet, daß die dem axialen Lagerelement (12, 19) gegenüberliegende seitliche Begrenzung (13) der Aussparung (10) geneigt oder gewölbt ist.

4. Fräser nach Anspruch 3, dadurch gekennzeichnet, daß die untere Seite (9) des Schneidlings (2, 17, 18) mit der angrenzenden geneigten oder gewölbten Begrenzung (13) der Aussparung (10) einen stumpfen Winkel bildet.

5. Fräser nach einem der vorhergehenden Ansprüche, dadurch gekennzeichnet, daß das axiale Lagerelement (12, 19) im Abstand von der Mitte (21) der unteren Seite (9) angeordnet ist.

6. Fräser nach einem der vorhergehenden Ansprüche, dadurch gekennzeichnet, daß die Lagerelemente (12, 14, 19) als Lagernocken ausgebildet sind.

7. Fräser nach einem der vorhergehenden Ansprüche, dadurch gekennzeichnet, daß die Lagernocken (14, 19) aufweisenden Schneidlinge (2, 17, 18) jeweils einstückige Platten aus gesintertem Hartmetall sind.

8. Fräser nach einem der vorhergehenden Ansprüche, dadurch gekennzeichnet, daß die Anschlagelemente (7) senkrecht an den Auflageflächen (15) nach außen abstehende Stifte sind.

### Claims

1. Milling cutter having replaceable cutters (2, 17, 18) that are secured by means of clamping elements (4) in grooves (3) in the milling-cutter body (1) and are supported radially on two support bearings and axially on one support bearing, the cutters (2, 17, 18) having bearing elements in the form of support bearings on their lower side (9) opposite their cutting edge (16), characterised in that formed on each of the cutters (2, 17, 18) is a single, axially arranged bearing element (12, 19) which rests at one side against a stop element (7) that projects radially from the base of the groove, and that the radially effective bearing elements (14) project from the lower side (9).

2. Milling cutter according to claim 1, characterised in that the axial bearing element (12, 19) forms a lateral boundary of a cut-out (10) provided in the lower side (9) of the cutter (2, 17, 18).

3. Milling cutter according to claim 2, characterised in that the lateral boundary (13) of the cut-out (10), which boundary is opposite the axial bearing element (12, 19), is inclined or arched.

4. Milling cutter according to claim 3, characterised in that the lower side (9) of the cutter (2, 17, 18) forms an obtuse angle with the adjacent inclined or arched boundary (13) of the cut-out (10).

5. Milling cutter according to one of the preceding claims, characterised in that the axial bearing element (12, 19) is arranged at a distance from the centre (21) of the lower side (9).

6. Milling cutter according to one of the preceding claims, characterised in that the bearing elements (12, 14, 19) are in the form of bearing lugs.

7. Milling cutter according to one of the preceding claims, characterised in that the cutters (2, 17, 18) having bearing lugs (14, 19) are one-piece plates of sintered hard metal.

8. Milling cutter according to one of the preceding claims, characterised in that the stop elements (7) are pins that project outwards perpendicularly from the supporting surfaces (15).

### Revendications

1. Fraise comportant des plaquettes de coupe (2, 17, 18) remplaçables, qui se fixent, au moyen d'éléments de bridage (4), dans des rainures (3) prévues dans le corps (1) de la fraise et qui s'appuient radialement sur deux portées d'appui et axialement sur une portée d'appui, étant précisé que les plaquettes de coupe (2, 17, 18) présentent, sur le côté inférieur (9), opposé à leur tranchant (2), des éléments formant portée conçus comme portées d'appui, caractérisée en ce que sur les plaquettes de coupe (2, 17, 18) est respectivement formé un unique élément (12, 19) qui forme portée dirigée axialement et qui s'appuie d'un côté sur un élément (7) formant butée qui vient en saillie radiale dans le fond de la rainure ; et en ce que les éléments (14) qui forment portée agissant radialement viennent en saillie sur le côté inférieur (9).

2. Fraise selon la revendication 1, caractérisée en ce que l'élément (12, 19), qui forme portée axiale, forme une limite latérale d'un évidement (10) prévu sur le côté inférieur (9) de la plaquette de coupe (2, 17, 18).

3. Fraise selon la revendication 2, caractérisée en ce que la limite latérale (13), située en face de l'élément (12, 19) qui forme portée axiale, de l'évidement (10) est inclinée ou en voûte.

4. Fraise selon la revendication 3, caractérisée en ce que le côté inférieur (9) de la plaquette de coupe (2, 17, 18) fait un angle obtus avec la limite de l'évidement (10) voisine, inclinée en voûte.

5. Fraise selon l'une des revendications précédentes, caractérisée en ce que l'élément (12, 19) qui forme portée axiale est disposé à une certaine distance de la médiane (21) du côté inférieur (9).

6. Fraise selon l'une des revendications précédentes, caractérisée en ce que les éléments (12, 14, 19) formant portées sont conçus sous forme de bossages formant portées.

7. Fraise selon l'une des revendications précédentes, caractérisée en ce que les plaquettes de coupe (2, 17, 18), présentant des bossages (14, 19) formant portées, sont respectivement des plaquettes d'une pièce en métal dur fritté.

8. Fraise selon l'une des revendications précédentes, caractérisée en ce que les éléments (7) formant butée sont des goupilles qui viennent en saillie vers l'extérieur, perpendiculairement aux surfaces d'appui (15).

FIG.2

FIG.1

FIG.3

FIG.4